# EUROPEAN PATENT APPLICATION

(11) **EP 1 486 327 A2**
(43) Date of publication of application: **15.12.2004**
(21) Application number: 04013646.7
(22) Date of filing: 09.06.2004
(51) Int. Cl.: B41C 1/10

(54) **Printing plate precursor with a thermally sensitive layer comprising nitrocellulose particles**

(30) Priority: 12.06.2003 US 459819
(71) Applicant: Kodak Polychrome Graphics LLC, Norwalk, Connecticut 06851 (US)
(72) Inventor: Leon, Jeffrey W., Rochester New York 14607 (US); Knight, Elizabeth, Lafayette Colorado 80026 (US)
(74) Representative: VOSSIUS & PARTNER

(57) **Abstract**

The present invention provides a negative working printing plate precursor including a substrate and a thermally sensitive layer. The thermally sensitive layer includes nitrocellulose particles and a photothermal conversion material. The printing plate precursor may be imagewise exposed to radiation and then mounted on a printing press without requiring a separate development step.

## Description

The art of lithographic printing is based on the immiscibility of ink and water. A lithographic printing plate is composed of ink receptive regions, commonly referred to as the "image area," and hydrophilic regions. When the surface of the printing plate is moistened with water and printing ink is applied, the hydrophilic regions retain the water and repel the printing ink, and the image area accepts the printing ink and repels the water. The printing ink retained on the image area may then be transferred to the surface of a material upon which the image is to be reproduced. Typically, the ink is first transferred to an intermediate blanket, which in turn transfers the ink to the desired surface.

Lithographic printing plates typically comprise a radiation-sensitive coating applied over the hydrophilic surface of a substrate. Conventional radiation-sensitive coatings include photosensitive components dispersed within an organic polymeric binder. After a portion of the coating is exposed to radiation (commonly referred to as imagewise exposure), the exposed portion becomes either more developable or less developable in a particular liquid than an unexposed portion of the coating. A printing plate is generally considered a positive-working plate if, after exposure to radiation, the exposed portions or areas of the radiation-sensitive coating become more developable and are removed in the developing process to reveal the hydrophilic surface. Conversely, the plate is considered a negative-working plate if the exposed portions or areas become less developable in the developer and the unexposed portions or areas are removed in the developing process. After being developed in a suitable liquid, the image area that remains on the plate provides an ink-receptive image, while the revealed regions of the substrate's hydrophilic surface repel ink.

Radiation exposure of imaging layers is generally performed using either ultraviolet, infrared ("IR") or visible radiation. IR radiation exposure (as well as other types of radiation exposure) may be advantageously utilized in an imaging technique referred to herein as "direct-write" imaging. Direct-write imaging using infrared radiation is a process in which a thermally sensitive coating of a printing plate precursor is exposed to infrared radiation from a laser source. More particularly, a computer-controlled infrared laser imagewise exposes small regions of the thermally sensitive composition to produce an image area pixel-by-pixel. Examples of plates prepared by this process are reported in U.S. Patent No. 5,372,915 (Haley et al.). These plates include an imaging layer comprising a mixture of dissolvable polymers and an infrared radiation absorbing compound. Although the reported plates utilize direct writing techniques, the imaged plates must still be developed in an alkaline solution prior to mounting on a press.

It has further been recognized that such direct writing techniques may be utilized in the formation of "processless" printing plates. As used herein, the term "processless" refers to printing plate precursors that do not require one or more conventional processing steps (e.g. development) prior to mounting on a printing press.

One method for forming processless printing plates is through ablation of a thermally sensitive layer. For example, Canadian Patent 1,050,805 (Eames) reports a dry planographic printing plate including an ink receptive substrate, an overlying silicone rubber layer, and an interposed layer containing laser energy absorbing particles (e.g. carbon particles) in a self-oxidizing binder (e.g. nitrocellulose). When such plates are exposed to focused, near-IR radiation with a laser, the absorbing layer converts the infrared energy to heat thus partially loosening, vaporizing or ablating the absorber layer and the overlying silicone rubber. Similar plates are reported in *Research Disclosure* 19201 (1980) as having vacuum-evaporated metal layers to absorb laser radiation in order to facilitate the removal of a silicone rubber overcoat layer. These plates are developed by wetting with hexane and rubbing. Additional patents reporting ablatable printing plates include U.S. Patent 5,385,092 (Lewis et al.), U.S. Patent 5,339,737 (Lewis et al.), U.S. Patent 5,353,705 (Lewis et al.), U.S. Reissue 35,512 (Nowak et al.), and U.S. Patent 5,378,580 (Leenders).

Ablatable printing plates have a number of disadvantages. The process of ablation tends to produce debris and vaporized materials in the image setting equipment, which must consequently be collected. Also, the laser intensity or power required for ablation may be very high, and the components of such printing plates may be expensive, difficult to use, possess a reduced life, and may produce an unacceptable printing quality.

Thermal or laser mass transfer is another method of preparing processless lithographic printing plates. Such methods are reported, for example, in U.S. Patent 5,460,918 (Ali et al.) wherein a hydrophobic image is transferred from a donor sheet to a microporous hydrophilic crosslinked silicated surface of the receiver sheet. U.S. Patent 3,964,389 (Peterson) reports a process of laser transfer of an image from a donor material to a receiver material including a high temperature post-heating step.

EP-A 0 652 483 (Ellis et al.) reports processless lithographic printing plates that are imageable using IR lasers, and that do not require wet processing prior to mounting on a press. These plates comprise an imaging layer that becomes more hydrophilic upon imagewise exposure to heat. This coating contains a polymer having pendant groups (such as t-alkyl carboxylates) that are capable of reacting under heat or acid to form more polar, hydrophilic groups.

U.S. Patent Nos. 6,482,571 and 6,548,222 to Teng report on-press developable printing plates having a thermosensitive layer including a free radical initiator, a radiation absorbing material and a polymerizable monomer.

European Patent Applications 1 080 884, 0 839 647, 0 849 091, 0 770 497, 0770 496, and 0 770 495, as well as U.S. Patent No. 6,427,595 all report a thermally sensitive material that includes a binder containing hydrophobic thermoplastic particles.

The use of nitrocellulose in processless plates has also been reported. For example, U.S. Patent No. 5,324,617 (Majima et al.) reports a printing material formed from a self-combustible material such as a nitrocellulose film. When contacted with IR radiation, portions of the film combust to form an image for use in gravure printing processes. U.S. Patent No. 6,110,645 reports a two-layer processless printing plate having a substrate, a first layer containing nitrocellulose and a radiation absorbing dye or pigment, and a hydrophilic layer that becomes oleophilic upon exposure to radiation.

In one embodiment, the present invention provides a printing plate precursor including a substrate and the thermally sensitive layer applied onto a surface of the substrate. The thermally sensitive layer includes nitrocellulose particles and a photothermal conversion material.

The nitrocellulose particles are discrete particles (as opposed to a continuous film), and may have a mean major dimension between about 0.03 and 0.5 microns, more particularly between about 0.05 and 0.3 microns. The photothermal conversion material may be any suitable radiation absorbing material that, upon exposure to radiation, converts the radiation to heat.

The thermally sensitive layer may optionally include a polymeric binder. Suitable polymeric binders may include polyvinyl alcohol, polyvinyl pyrrolidone, polyethyleneimine, polyethyloxazoline, polyacrylamide, gelatin, polyacrylic acid, as well mixtures, copolymers or derivatives thereof. The thermally sensitive material may also include one or more surfactants, humectants, biocides, viscosity builders, colorants, pH adjusters, drying agents, defoamers or combinations thereof.

In another embodiment, the present invention provides a method for forming a printing plate precursor wherein a coating mixture that includes nitrocellulose particles, photothermal conversion material and optional additives is applied onto a surface of a substrate. As used herein, the term "coating mixture" refers to any heterogeneous or homogeneous combination or mixture of two or more materials. For example, the coating mixture may be a true solution (i.e. a dispersion at the molecular or ionic level) a dispersion, a colloidal dispersion, a slurry, a suspension, an emulsion or any other similar mixture. The coating mixture may include a substantially aqueous carrier, nitrocellulose particles, a photothermal conversion material, and one or more optional surfactants.

Once applied onto the substrate, the coating mixture may be dried to form a thermally sensitive layer. The thermally sensitive layer may then be imagewise exposed to thermal radiation such that portions of the layer exposed to the radiation are less developable in fountain solution and/or ink than unexposed portions. More specifically, it is believed that the heat generated by the IR absorber during radiation exposure causes the nitrocellulose to decompose and/or combust and the particles to leave behind a substantially insoluble residue as a product of the combustion.

The imaged printing plate precursor may then be mounted onto a printing press without further processing. The fountain solution and/or ink removes unexposed portions of the thermally sensitive layer to form an image area. The image area is able to uptake printing ink and to transfer the printing ink to a desired medium.

Printing plates and printing plate precursors formed according embodiments of the present invention have several beneficial characteristics. First, portions of the thermally sensitive layer that are exposed to IR radiation may adhere well to suitable substrates, such as aluminum substrates. Second, areas of the radiation sensitive layer that are not exposed to radiation need not be developed using alkaline developers as required by many conventional printing plates. Third, imaged printing plate precursors may be developed on-press such that a separate development step is not required before printing. Fourth, the thermally sensitive layer does not require a free-radical initiator to form an image area.

In one embodiment, the present invention provides a processless printing plate including a thermally sensitive layer applied onto a substrate. The thermally sensitive layer is composed primarily of nitrocellulose particles and a photothermal conversion material.

Suitable substrates for the present invention may vary widely depending upon the desired application and the specific composition employed. Suitable substrates or substrate surfaces may be hydrophilic, and may be composed of metals, polymers, ceramics, stiff papers, or laminates or composites of these materials. Suitable metal substrates include aluminum, zinc, titanium and alloys thereof. In one embodiment, the substrate includes aluminum, which may be grained, anodized and/or post-treated with a suitable interlayer material. Suitable polymeric supports may include polyethylene terephthalate and polyester films. The substrate may be of sufficient thickness to sustain the wear from printing or other desired applications, and be thin enough to wrap around a printing form, typically having a thickness from about 100 to about 600 µm.

Specific examples of suitable substrates and substrate treatments are provided in Table 1 below:

**TABLE 1**

| **SUBSTRATE** | **SURFACE TREATMENT** | **INTERLAYER TREATMENT** |
|---|---|---|
| AA | Quartz Grained and Anodized | None |
| EG-PVPA | Electrograined and Anodized | Polyvinyl phosphonic acid |
| PF | Electrograined and Anodized | Sodium dihydrogen phosphate/Sodium fluoride |
| G20 | Electrograined and Anodized | Vinylphosphonic acid/acrylamide copolymer |
| EG-Sil | Electrograined and Anodized | Sodium Silicate |
| DS-Sil | Chemically Grained and Anodized | Sodium Silicate |
| PG-Sil | Pumice Grained and Anodized | Sodium Silicate |
| CHB-Sil | Chemically Grained, Anodized and Silicated | Sodium Silicate |

In Table 1 above, the abbreviation "AA" refers to "as anodized." An aluminum surface is quartz grained and then anodized using DC current of about 8 A/cm² for 30 seconds in a 3 Molar H₂SO₄ (280g/liter) solution at 30 °C.

"EG" refers to electrolytic graining. The aluminum surface is first degreased, etched and subjected to a desmut step (removal of reaction products of aluminum and the etchant). The plate is then electrolytically grained using an AC current of 30-60 A/cm² in a 0.3 Molar HCl solution for 30 seconds at 25 °C, followed by a post-etching alkaline wash and a desmut step. The grained plate is then anodized using DC current of about 8 A/cm² for 30 seconds in a 3 Molar H₂SO₄ solution (280 g/liter) at 30 °C.

"PVPA" refers to polyvinylphosphonic acid. A plate is immersed in a PVPA solution and then washed with deionized water and dried at room temperature.

"PF" refers to a substrate that has a phosphate fluoride interlayer. The process solution contains sodium dihydrogen phosphate and sodium fluoride. An anodized substrate is treated in the solution at 70 °C for a dwell time of 60 seconds, followed by a water rinse and drying. The sodium dihydrogen phosphate and sodium fluoride are deposited as a layer to provide a surface coverage of about 500 mg/m² .

"G20" is a printing plate substrate described in U.S. Patent No. 5,368,974, which is incorporated herein by reference.

"Sil" refers to an anodized plate is then immersed in a sodium silicate solution to coat it with an interlayer. The coated plate is then rinsed with deionized water and dried at room temperature.

"DS" refers to "double sided smooth." An aluminum oxide plate is degreased, etched or chemically grained, and subjected to a desmut step. The smooth plate is then anodized.

"PG" refers to "pumice grained." The surface of an aluminum substrate is degreased, etched and subjected to a desmut step. The plate is then mechanically grained by subjecting it to a 30% pumice slurry at 30 °C, followed by a post-etching step and desmut step. The grained plate is then anodized using DC current of about 8 A/cm² for 30 seconds in a 3 Molar H₂SO₄ solution at 30 °C. The anodized plate is then coated with an interlayer of, for example, sodium silicate.

"CHB" refers to chemical graining in a basic solution. After an aluminum substrate is subjected to a matte finishing process, a solution of 1 to 3 Molar NaOH is used during graining at 50 °C to 70 °C for 1 minute. The grained plate is then anodized using DC current of about 8 A/cm² for 30 seconds in a 3 Molar H₂SO₄ solution at 30 °C. The anodized plate is then coated with a silicate-based interlayer.

A thermally sensitive layer including nitrocellulose particles may be applied onto the substrate. The nitrocellulose particles for use in the present invention may be formed by conventional methods using commercially available materials that may be obtained, for example, from Aldrich, Milwaukee, WI. The nitrocellulose starting materials may have a nitrogen content of between about 5 and about 15% and a viscosity of from about 10 to about 500,000 cps (12.2 wt% in 25:20:55 ethanol-toluene-ethyl acetate, 25 °C), more particularly between about 10 and about 5000 cps. The nitrocellulose particles used in the thermally sensitive layer of the present invention may also be sized to have a mean major dimension (i.e. mean particle diameter) between about 0.03 to about 0.5 microns, more particularly between about 0.05 and 0.3 microns.

In one embodiment, the nitrocellulose particles are prepared by solvent evaporation techniques. First, an organic solution phase is prepared by combining nitrocellulose with a water-immiscible solvent in which it is soluble. The resulting solution is then suspended in an aqueous phase that may contain a suitable surfactant. The resulting suspension is subjected to high shear mixing to reduce the size of the polymer-solvent droplets. This shearing step may optionally be removed and the polymer-solvent droplets may optionally coalesce to the extent allowed by the dispersant to form coalesced polymer-solvent droplets. The solvent is then removed from the droplets to form solidified nitrocellulose particles dispersed in the aqueous solution. The nitrocellulose particles may be isolated from the aqueous solution by filtration, sedimentation, centrifugation or other suitable means, however, the nitrocellulose particles are generally maintained as an aqueous nitrocellulose dispersion. Optionally, excess surfactant or other impurities may be removed from the nitrocellulose dispersion by dialysis or ultrafiltration. The nitrocellulose dispersion may have a solids concentration between about 2 and about 50 percent, more particularly, between about 5 and about 30 percent.

Suitable solvents for dissolving the nitrocellulose are generally water immiscible and include, for example, chloromethane, dichloromethane, ethyl acetate, *n*-propyl acetate, isopropyl acetate, vinyl chloride, methyl ethyl ketone (MEK), trichloromethane, carbon tetrachloride, ethylene chloride, trichloroethane, toluene, xylene, cyclohexanone, 2-nitropropane and the like. *n*-Propyl acetate, isopropyl acetate, ethyl acetate and methylene chloride may be particularly useful for embodiments of the present invention.

The high shear mixing step may occur at rate of shear or a velocity gradient of approximately 10⁵min⁻¹ or greater, more particularly about 10⁶min⁻¹ or greater. "Rate of shear" generally refers to a value obtained by dividing an absolute value of a difference of speeds of two planes by a distance between the two planes. For example, a high pressure homogenizer operated at 1400 psi provides a rate of shear approximately equal to 6x10⁶ min⁻¹. High pressure homogenizers may be particularly suitable for the present invention. The shearing step may be performed using, for example, a high speed blade mixer, a chemical blender, a rotor stator device such as a Silverson mixer (Silverson, East Longmeadow, MA) or high pressure homogenizer such as a Manton-Gaulin Homogenizer, a Sonolator (Sonic Corp., Stratford, CT), a probe sonicator, or a Microfluidizer, such as the Model No. 110T Microfluidizer® (produced by Microfluidics Manufacturing, Newton, MA).

Suitable surfactants used during the preparation of the nitrocellulose suspension may be cationic, nonionic, zwitterionic, or anionic and may have a hydrophile-lipophile balance of greater than 8. The hydrophile-lipophile balance (HLB) parameter is defined in Griffin, W. C. *J. Soc. Cosmetic Chemists* 1949,*1*, 311 and in Griffin, W. C *J. Soc. Cosmetic Chemists* 1954, *5*, 249. Suitable surfactants and sources for suitable surfactants are reported in *Surfactant Handbook* (GPO: Washington, D. C., 1971) and *McCutcheon's Emulsifiers and Detergents* (Manufacturing Confectioner Publishing Company: Glen Rock, 1992). Suitable surfactants may have a solubility or dispersibility in water or in a mixture of water and one or more water-miscible solvents.

Some specific examples of suitable surfactants include, but are not necessarily limited to sodium dodecylsulfate, sodium dodecylbenzenesulfonate, sulfosuccinate esters, including AEROSOL brand surfactants, fluorosurfactants such as ZONYL brand surfactants (available from E.I. Dupont de Nemours & Co.) and FLUORAD brand surfactants (available from 3M, St. Paul, MN), sulfonated alkyl-substituted diphenyl ethers such as DOWFAX brand surfactants (available from Dow), ethoxylated alkylphenols such as TRITON X-100 and TRITON X-705 brand surfactants (available from Dow), ethoxylated alkylphenol sulfates such as RHODAPEX CO-436 brand surfactants (available from Rhodia, Baltimore, MD), phosphate ester surfactants such as GAFAC RE-90 brand surfactants (available from Dow), quaternary ammonium compounds such as hexadecyltrimethylammonium bromide and Uniquat CB-50 brand surfactants (available from Lonza Inc., Switzerland), polyoxyethylenated long-chain amines and their quaternized derivatives, ethoxylated silicones, alkanolamine condensates, polyethylene oxide-co-polypropylene oxide block copolymers, PLURONIC (available from BASF , Mount Olive, NJ) and TECTRONIC brand surfactants, hydrophobe-end capped oligoacrylamides, such as those reported in U.S. Patent No. 6,127,453, N-alkylbetaines, N-alkyl amine oxides, and alkylnaphthalenesulfonate salts, such as Alkanol XC brand surfactants (available from E.I. DuPont de Nemours & Co.).

The nitrocellulose particles of the present invention may provide a thermally sensitive layer having strong adhesion to suitable substrates, high print quality, and long press life. By controlling particle size, these characteristics may be further improved.

The thermally sensitive layer also includes a photothermal conversion material. Suitable photothermal conversion materials may absorb infrared radiation and convert it to heat to affect the developability of the thermally sensitive layer in a suitable developer. Suitable photothermal conversion materials may include, for example, Prussian Blue, Paris Blue, Milori Blue, cyanine dye, indoaniline dye, oxonol dye, porphyrin derivatives, anthraquinone dye, merostyryl dye, pyrylium compounds, squarylium derivatives and carbon black.

Suitable carbon black radiation materials include surface-functionalized and/or polymer-grafted carbon black. The term "polymer grafted carbon black" denotes a chemically modified carbon black in which a synthetic polymer or copolymer is covalently bonded to the surface of the carbon particles. Such modified carbon materials may have improved dispersibility in specific solvents due to the steric stabilization imparted by the polymer grafts. Methods of introducing surface functionalities onto carbon particle surfaces include electrical discharge treatment (JP 6-025572), treatment with ultraviolet radiation (JP 5-339516), chemical oxidation (FR-A-911,059, CA-A-537,787, FR-A-1,195,792, GB-A-895,990, U.S. Pat. No. 2,439,442 and U.S. Pat. No. 3,216,843), and through control of the pyrolytic conditions under which the carbon black is manufactured ("Carbon Black," Marcel-Dekker, New York, 15 (1976)).

Additionally, numerous techniques have been reported for using these induced surface functionalities for grafting synthetic polymers onto carbon black. One method includes reacting surface functionalized carbon black with a polymer or copolymer containing specific chemical moieties known to react with the surface functionalized group (JP 9-059331 and JP 8-337624). One such example is the modification of a carboxylic acid functionalized carbon with a polymer or copolymer containing aziridine, oxazoline, thioepoxide, N-hydroxyalkylamide, or epoxide moieties (U.S. Pat. No. 4,880,857). Alternatively, a polymerization reaction may be carried out in the presence of a surface functionalized carbon black including chemical groups capable of initiating or terminating the polymerization. In JP 6-263830, such a procedure is reported in which a peroxide-functionalized carbon black is used to initiate the polymerization of vinylic monomers. Other such preparations are reported in JP 3-174422 and JP 56-129210.

Dyes, especially dyes with a high extinction coefficient in the range of 750 nm to 1200 nm, may be particularly suitable. Suitable radiation absorbing dyes are also reported in numerous publications, for example, EP 0 823 327, U.S. Pat. No. 4,973,572, U.S. Pat. No. 5,244,771, U.S. Pat. No. 5,401,618, and also U.S. Patent No. 6,248,886. Specific examples of suitable dyes include: 2-[2-[2-phenylsulfonyl-3-[2-(1,3-dihydro-1,3,3-trimethyl-2H-indol-2-ylidene)-ethylidene]-1-cyclohexen-1-yl]-ethenyl]-1,3,3-trimethyl-3H-indolium chloride; 2-[2-[2-thiophenyl-3-[2-(1,3-dihydro-1,3,3-trimethyl-2H-indol-2-ylidene)-ethylidene]-1-cyclohexen-1-yl]-ethenyl]-1,3,3-trimethyl-3H-indolium chloride; 2-[2-[2-thiophenyl-3-[2-(1,3-dihydro-1,3,3-trimethyl-2H-indol-2-ylidene)-ethylidene]-1-cyclopenten-1-yl]-ethenyl]-1,3,3-trimethyl-3H-indolium tosylate; 2-[2-[2-chloro-3-[2-ethyl-(3H-benzthiazole-2-ylidene)-ethylidene]-1-cyclohexen-1-yl]-ethenyl]-3-ethyl-benzthiazolium tosylate; and 2-[2-[2-chloro-3-[2-(1,3-dihydro-1,3,3-trimethyl-2H-indol-2-ylidene)-ethylidene]-1-cyclohexen-1-yl]-ethenyl]-1,3,3-trimethyl-3H-indolium tosylate. Other examples of useful absorbing dyes include: ADS-830A and ADS-1064 (American Dye Source, Montreal, Canada), EC2117 (FEW, Wolfen, Germany), Cyasorb IR 99 and Cyasorb IR 165 (Glendale Protective Technology), Epolite IV-62B and Epolite III-178 (Epoline), PINA-780 (Allied Signal), SpectraIR 830A and SpectraIR 840A (Spectra Colors).

Additional examples of suitable IR dyes may include, but are not limited to, bis(dichlorobenzene-1,2-thiol)nickel(2:1)tetrabutyl ammonium chloride, tetrachlorophthalocyanine aluminum chloride, and the compounds provided in Table 2:

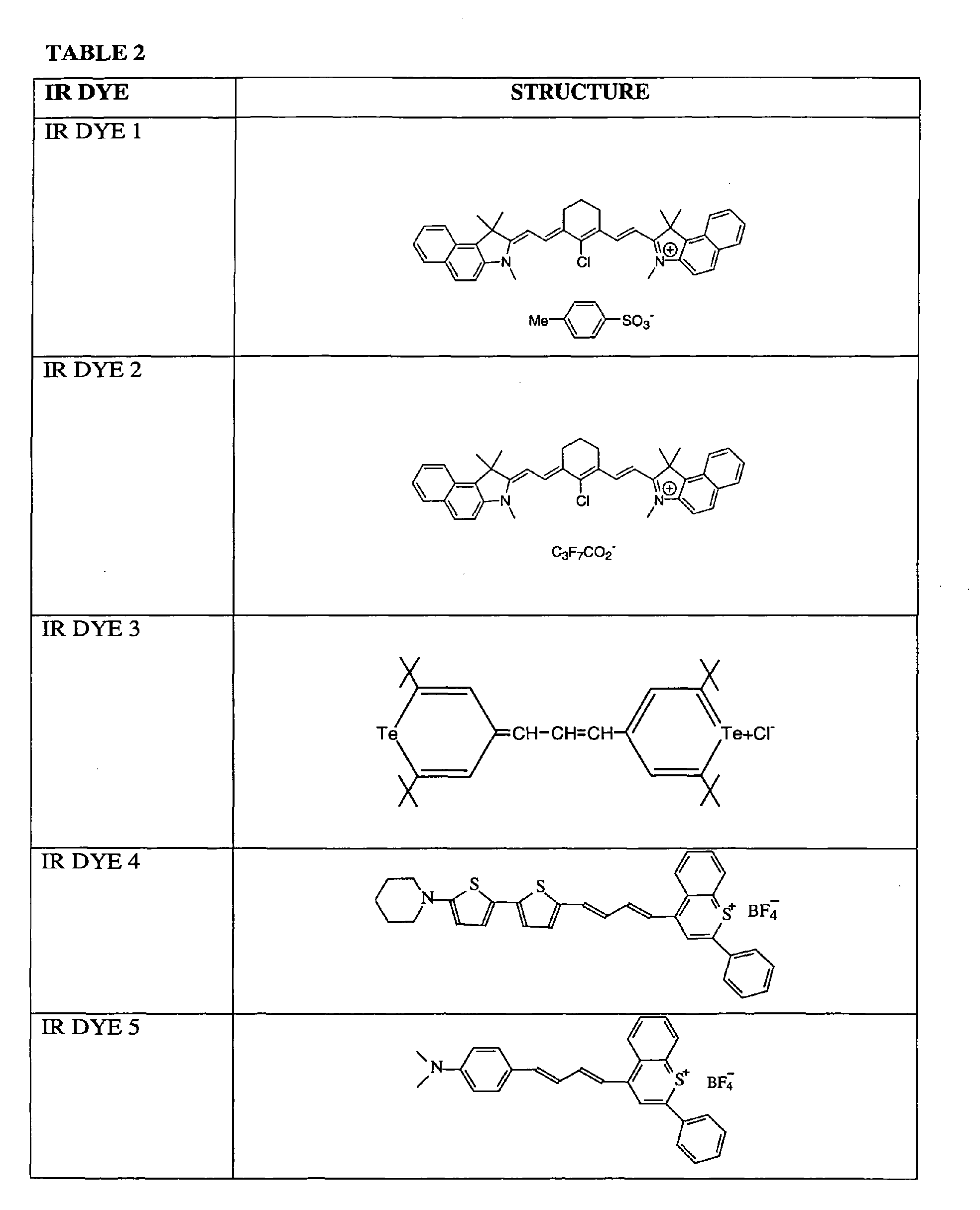

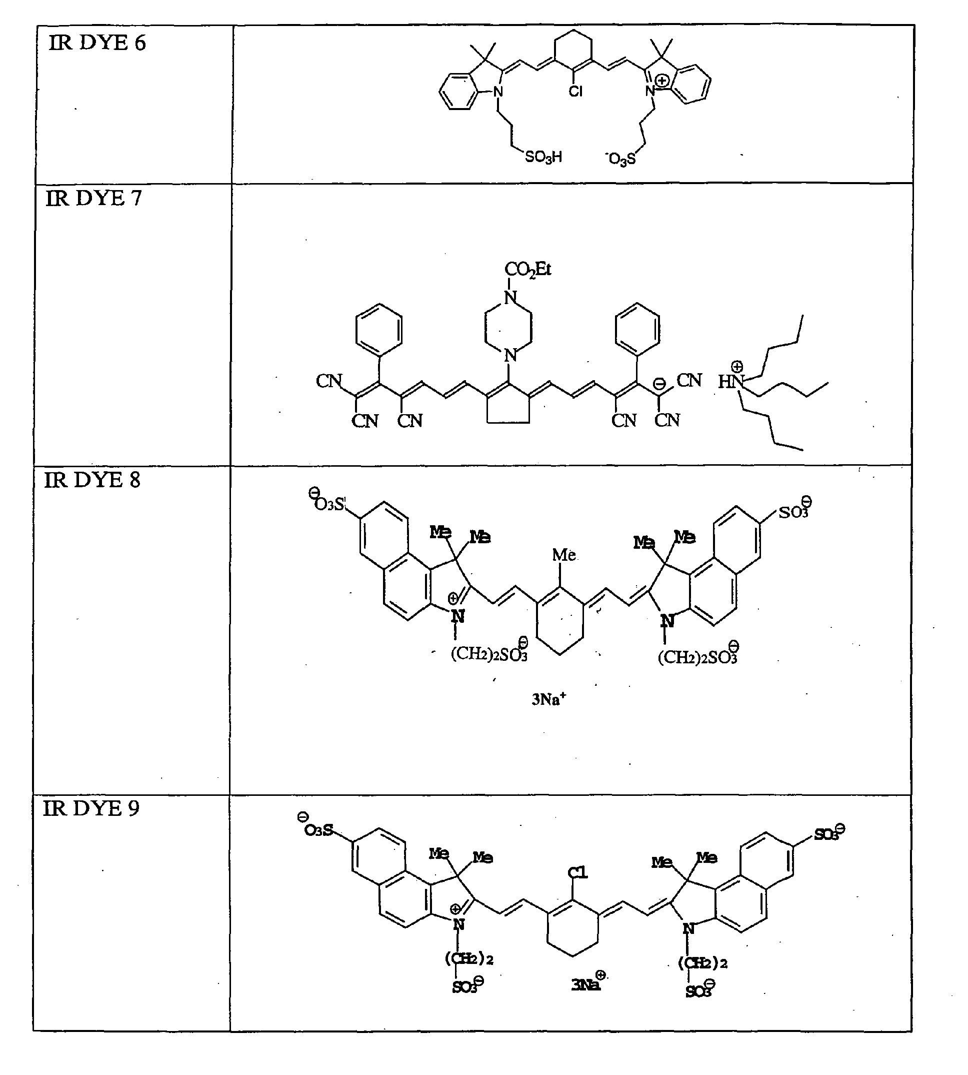

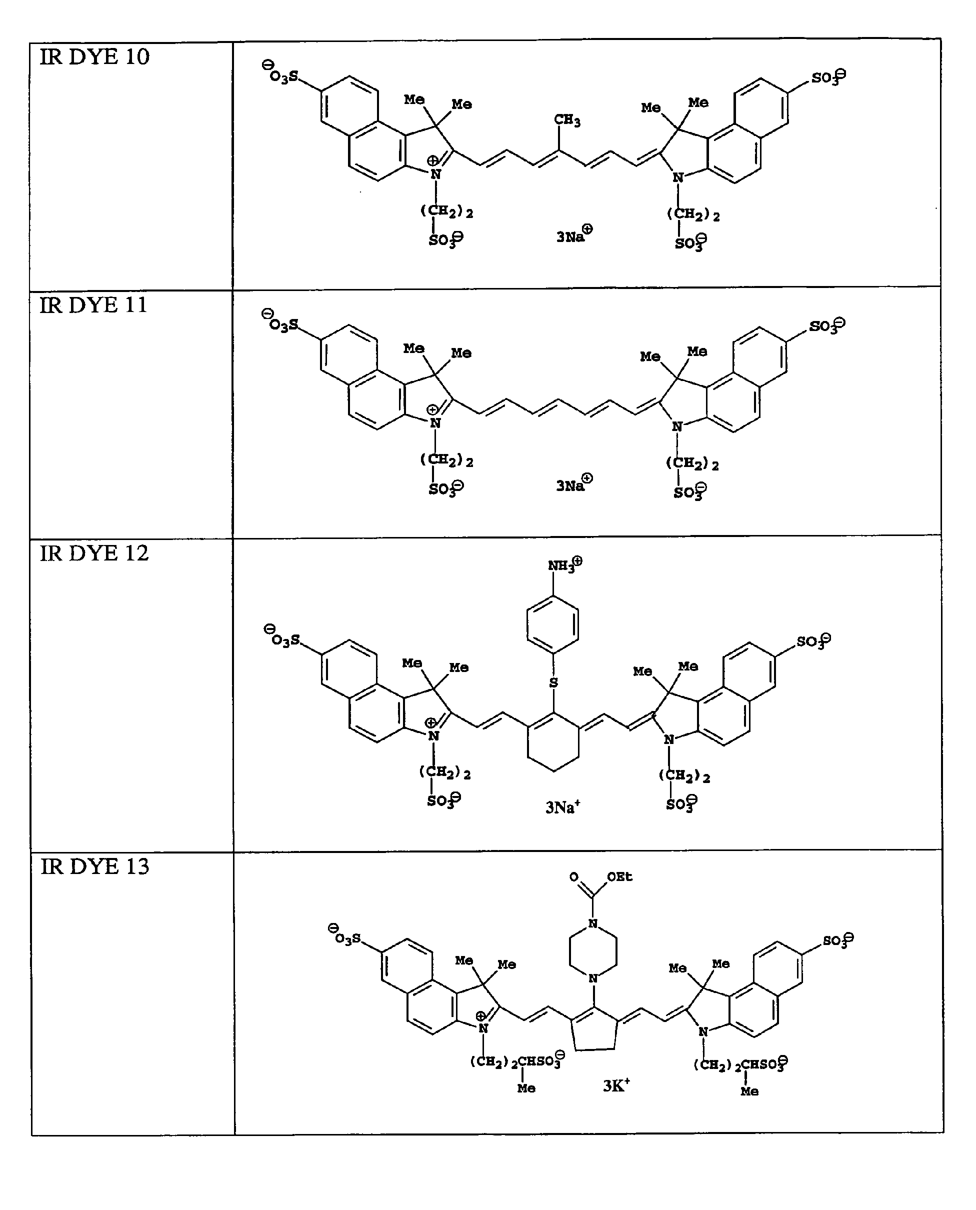

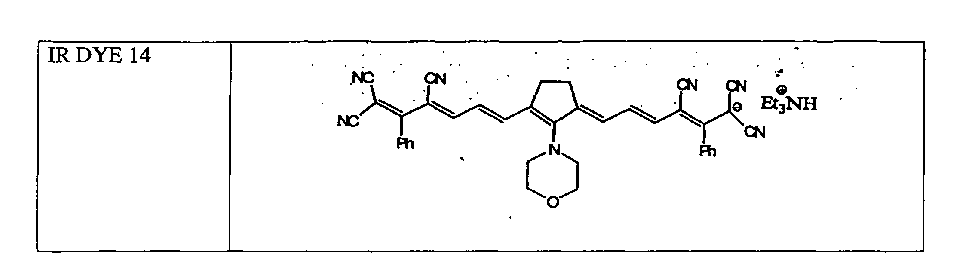

IR Dyes 1-7 may be prepared using known procedures or may be obtained from several commercial sources (for example, Esprit, Sarasota, FL). IR dyes 8-14 may also be prepared using known procedures, as reported, for example, in U.S. Patent 4,871,656 (Parton et al.) and references reported therein (for example, U.S. Patent 2,895,955, U.S. Patent 3,148,187 and U.S. Patent 3,423,207). Other useful IR dyes are reported in U.S. Patent 5,605,780. IR Dye 6 may be particularly suitable for use in the present invention

Optionally, the radiation-sensitive layer of the present invention may include a polymeric binder. Suitable polymeric binders may be water-soluble or water-dispersible. Examples of suitable polymeric binders include, but are not limited to hydrophilic synthetic and naturally-occurring polymers and copolymers derived from polyvinylpyrrolidone, polyethyloxazoline, imidazole, polyacrylamides, poly(vinyl alcohol), poly(vinyl methyl ether), poly(vinyl ethyl ether), poly(alkylene oxide), gelatin, cellulose ethers and esters, poly(vinylacetamides), partially hydrolyzed poly(vinyl acetate/vinyl alcohol), poly(acrylic acid), sulfonated or phosphated polyesters and polystyrenes, casein, albumin, chitin, chitosan, dextran, pectin, collagen derivatives, collodian, agar-agar, arrowroot, guar, carrageenan, tragacanth, xanthan, rhamsan and mixtures thereof. In one embodiment, the thermally sensitive layer includes nitrocellulose particles, IR dye and a polyvinyl alcohol or polyvinyl pyrrolidone binder.

The thermally sensitive layer may also optionally include one or more additives, including dispersing agents, humectants, biocides, surfactants, viscosity builders, colorants, pH adjusters, drying agents, defoamers or combinations thereof.

The thermally sensitive layer reported herein may be applied to the substrate as a coating mixture. Suitable carriers for use in the coating mixture may include aqueous carriers. As used herein, the term "aqueous" refers to carriers including at least 10 volume percent water, more particularly, at least about 50 volume percent water. The aqueous carrier may also include one or more water miscible organic liquids. Examples of suitable water miscible organic liquids include n-propanol and ethyl acetate.

Suitable amounts of the nitrocellulose particles, generally present in the nitrocellulose dispersion reported herein, and the photothermal conversion materials may be combined with the aqueous carrier to form the coating mixture. The optional polymeric binder may also be added to the solution before application to the substrate.

The solution may be applied to a suitable substrate (e.g. an aluminum substrate) by conventional methods, such as by spin coating, bar coating, gravure coating, knife coating or roller coating. In one embodiment, for example, the solution may be applied with a wire wound bar onto the substrate surface. The solution may then be air dried, oven dried or radiation cured to form a layer. This drying step may remove and/or evaporate portions of the carrier and/or certain optional components, such as portions of the carrier or the surfactant.

The resulting printing plate precursor may be imagewise exposed to thermal radiation, particularly to IR radiation, such that exposed portions of the thermally sensitive layer have a lower developability in fountain solution and/or ink than unexposed portions. An example of a suitable radiation source is the Creo Trendsetter 3230, which contains a laser diode that emits near infrared radiation at a wavelength of about 830 nm and is available from Creo Products Inc., Burnaby, BC, Canada. Other suitable radiation sources include the Crescent 42T Platesetter, an internal drum platesetter that operates at a wavelength of 1064 nm (Gerber Scientific, South Windsor, CT, USA), and the Screen PlatRite 4300 series or 8600 series (Screen, Chicago, Illinois). Additional useful radiation sources include direct imaging presses, which are able to image a plate while attached to a printing press cylinder. An example of a suitable direct imaging printing press includes the Heidelberg SM74-DI press, available from Heidelberg, Dayton, Ohio.

Advantageously, the resulting imaged printing plate precursor may be mounted in a printing press without first being subjected to a separate processing step using alkaline developers. Instead, the imaged printing plate precursor may be developed "on-press" by the fountain solution and/or ink used in conventional printing presses. Alternatively, in embodiments that utilize direct imaging presses, the printing plate precursor may be mounted on the direct image press, and may then be both exposed to infrared radiation and developed on-press.

Suitable fountain solutions for developing the imaged printing plate precursor include substantially aqueous solvents, which may be alkaline, neutral or acidic. Suitable materials that may be added to the aqueous solution include a variety of alcohols and alcohol replacements. Specific examples of suitable fountain solutions include mixtures of the following components in water:
- Varn Litho Etch 142W + Varn PAR (alcohol sub) @ 3 oz/gal each (Varn International, Addison, IL);
- Varn Crystal 2500 (1-step) @ 4.5 oz/gal (Varn International);
- Varn Total Chromefree (@ 3.2 oz/gal) (Varn International) + Anchor ARS-F (@ 1.2 oz/gal) (Anchor, Orange Park, FL);
- Anchor Emerald JRZ (3 oz/gal) + Anchor ARS-ML (3.5 oz/gal) (Anchor);
- Rosos Plain KSP (@ 3-4 oz/gal)+ Varn PAR @ 3 oz/gal each (Rosos Research Laboratories, Inc.);
- Rosos KSP 500 ( @ 5 oz/gal) + RV1000 (@ 4 oz/gal) (Rosos Research Laboratories, Inc.);
- Prisco 3451 U (@ 4 oz/gal) + Alkaless 3000 (@ 3 oz/gal) (Prisco, Newark, NJ);
- Prisco 4451 FK (@ 3 oz/gal) + Alkaless 6000 (@ 2 oz/gal) (Prisco);
- Prisco Webfount 300 (@ 2 oz/gal) + Alkaless 6000 (@ 3 oz/gal) (Prisco);
- Rycoline Green Diamond 251TW (@ 3 oz/gal) + Rycoline Green Diamond alcohol replacer (@ 2 oz/gal) (Rycoline, Chicago, IL);
- Allied PressControl EWS (@ 5 oz/gal) + HydroPlus (@ 1.5 oz/gal) (Allied Pressroom Chemistry, Hollywood, FL);
- RBP 910H (@ 3 oz/gal) + Aquanol 600 (@ 2 oz/gal) (RBP Chemical Technology, Milwaukee, WI);
- Allied Compliance ES (@ 3 oz/gal) + HydroDyne (@ 3 oz/gal) (Allied Pressroom Chemicals);

The unexposed areas of the thermally sensitive layer are removed after being contacted with fountain solution and/or ink as part of the normal printing process, while exposed areas remain adhered to the support to form an ink receptive image area. Ink applied to the image area may then be imagewise transferred to a suitable receiving material (such as cloth, paper, metal, glass or plastic) to provide one or more desired impressions. If desired, an intermediate blanket roller may be used to transfer the ink from the printing plate to the receiving material. The printing plate may be cleaned between impressions, if desired, using conventional cleaning methods.

The invention is further described in the following Examples.

### Preparation of the Nitrocellulose Dispersions

Nitrocellulose Dispersions A-D were prepared by similar methods incorporating the components reported in Table 3 below. An organic phase was prepared by dissolving cellulose nitrate in ethyl acetate and stirring for 1-4 hours at room temperature. An aqueous phase was prepared by dissolving the listed surfactants in water. The organic and aqueous phases were combined and emulsified, first using a Silverson L4 mixer (East Longmeadow, MA) on the highest setting and then by passage (twice) through a M-110T Microfluidizer, available from Microfluidics, Newton, MA. The volatile components were then stripped via rotary evaporation. Stripping continued for 15 to 30 minutes after the condensates were first observed as forming a single aqueous phase. Percent solids in the dispersion was measured by a subtractive method via Karl Fischer titration (for Nitrocellulose Dispersions B-D), or by weighing product dispersions and assuming constant mass balance (for Nitrocellulose Dispersion A). Particle sizes were determined by the Mie scattering method (Dispersion A), by using a Horiba LA-920 instrument (available from Horiba LTD, Irvine, CA) or by photon correlation spectroscopy (Dispersions B-D) using an Ultrafine Particle Analyzer (available from Microtrac, Inc, North Largo, FL). Specific components for each of Nitrocellulose Dispersions A-D is provided in Table 3 below.

**TABLE 3**

| **Dispersion** | **A** | **B** | **C** | **D** |
|---|---|---|---|---|
| Cellulose Nitrate 1 | 130.6g | 142.9g | 0g | 71.5g |
| Cellulose Nitrate 2 | 0g | 0g | 71.4g | 0g |
| Ethyl acetate | 230.0g | 400.0g | 200.0g | 200.0g |
| Alkanol XC | 60.0g | 150.0g | 0g | 0g |
| Dodecanethiol-endcapped acrylamide Decamer | 0g | 0g | 0g | 75g |
| Uniquat CB-50 | 0g | 0g | 15.0g | 0g |
| Water | 640.0g | 1000.0g | 500.0g | 500.0g |

Cellulose nitrate 1 is available from Aldrich Chemical, Milwaukee WI (cat. # 43,502-3), as a 70 percent solution in isopropanol. It has a nitrogen content of between about 11.8 and 12.2 weight percent and a viscosity of 18-25 cps (falling ball 12.2 w/w % in ethanol-toluene-ethyl acetate).

Cellulose Nitrate 2 is available from Aldrich chemical (cat. # 43,509-0) as a 70 percent solution in isopropanol. It has a nitrogen content of between 10.9 and 11.2 weight percent and a viscosity of 1900-2470 cps (falling ball, 12.2 w/w % in ethanol-toluene-ethyl acetate).

Alkanol XC is an anionic surfactant available from E.I. DuPont de Nemours and Co and is made up into a 10 percent solution in water. Dodecanethiol-endcapped acrylamide Decamer is a nonionic surfactant that was prepared according to U.S. Patent No. 6,127,453, col. 9, lines 40-55 as a 10 percent solution in water. Uniquat CB-50 is a cationic surfactant available from Lonza Inc., Fair Lawn, NJ and made into a 50 percent solution in water.

The resulting dispersions had the characteristics provided in Table 4 below.

**TABLE 4**

| **Dispersion** | **A** | **B** | **C** | **D** |
|---|---|---|---|---|
| Mean Particle Diameter | 0.128 microns | 0.070 microns | 0.219 microns | 0.084 microns |
| Percent Solids | 9.3 | 7.3 | 9.3 | 9.0 |

### Examples 1-5

Dispersion A was then combined with the components reported in Table 5 to form Coating Mixture A.

**TABLE 5**

| **Components** | **Percent Weight** |
|---|---|
| Dispersion A | 32.4 |
| Water | 67.1 |
| IR Dye 6 | 0.3 |
| Lodyne 228 | 0.2 |

Lodyne 228 is a surfactant available from Ciba, Tarrytown, NY., which was made into a 10 percent solution in n-propanol:water (1:2). IR dye 6 has the formula:

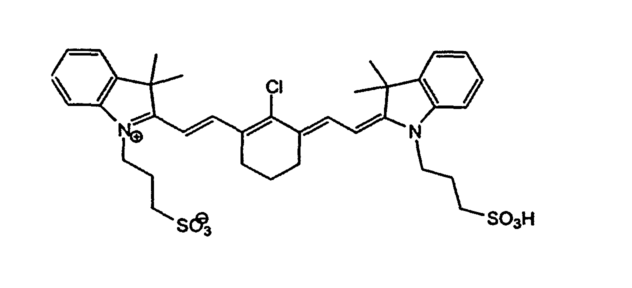

Examples 1-5 reported in Table 6 below include Coating Mixture A combined with various amounts and types of binders as reported below.

**TABLE 6**

| **Example** | **Binder Type (10% in water)** | **Binder Amount** | **Solution A Amount** |
|---|---|---|---|
| 1 | none | 0g | 3.0g |
| 2 | Mowiol 3-83 | 0.25g | 6.0g |
| 3 | Plasdone C-15 Povidone USP | 0.25g | 6.0g |
| 4 | S-630 | 0.25g | 6.0g |
| 5 | Copolymer 845 | 0.12g | 3.0g |

Mowiol 3-83 is a polyvinyl alcohol available from Clariant, Charlotte, NC. Plasdone C-15 Povidone USP is a polyvinyl pyrrolidone available from ISP, Wayne, NJ. S-630 is a vinylpyrrolidone/vinylacetate copolymer available from ISP. Copolymer 845 is a vinylpyrrolidone copolymer also available from ISP.

Each of Examples 1-5 were coated with a wire wound bar onto a grained and anodized aluminum substrate and were then air dried to form a thermally sensitive layer. The resulting printing plate precursors were imaged on a Creo Trendsetter 3244 imaging device at 300 mJ/cm² and were then mounted on a Komori press for printing. On-press results are reported in Table 7.

**TABLE 7**

| **Example** | **Print Quality** | **Run Length** |
|---|---|---|
| 1 | Plugged shadows | 14,000 |
| 2 | Satisfactory | 14,000 |
| 3 | Satisfactory | 13,000 |
| 4 | Satisfactory | 20,000 |
| 5 | Low ink density | 0 |

### Examples 6-9

Examples 6-9 were formed by combining the materials reported in Table 8 below.

**TABLE 8**

| **Example** | **6** (weight %) | **7** (weight %) | **8** (weight %) | **9** (weight %) |
|---|---|---|---|---|
| Dispersion C | 31.2 | 31.2 | 0 | 0 |
| Dispersion D | 0 | 0 | 32.2 | 32.2 |
| Water | 65.7 | 63.7 | 64.7 | 60.7 |
| IR Dye 6 | 0.3 | 0.3 | 0.3 | 0.3 |
| S-630 (10% in water) | 0 | 4.0 | 0 | 4.0 |
| Zonyl FSD (1% in water) | 2.8 | 0.8 | 2.8 | 2.8 |

Zonyl FSD is a surfactant available from Dupont.

Each of Examples 6-9 were coated with a wire wound bar onto a grained and anodized aluminum substrate and were then air dried to form a thermally sensitive layer. The resulting printing plate precursors were imaged on a Creo Trendsetter 3244 imaging device at 300 mJ/cm² and were then mounted on an A.B. Dick duplicator press for printing. Each of Examples 6-9 possessed clean backgrounds and printed multiple impressions before showing wear.

### Example 10

Example 10 was formed as reported in Table 9 below.

**TABLE 9**

| **Example 10 Materials** | **Percent Weight** |
|---|---|
| Dispersion A | 31.2 |
| Water | 64.1 |
| FX-GE-003 (15% in ethanol) | 1.9 |
| Zonyl FSD (1% in water) | 2.8 |

FX-GE-003 is a polyethylene glycol grafted carbon black dispersion available from Nippon Shokubai, Japan.

Example 10 was coated with a wire wound bar onto a grained and anodized aluminum substrate. The resulting printing plate precursor was imaged on a Creo Trendsetter 3244 imaging device at 300, 400 and 500 mJ/cm² and then mounted on an A.B. Dick duplicator press for printing. The printing plate of Example 10 printed multiple impressions before showing wear.

## Claims

1. A printing plate precursor comprising:
a substrate; and
a thermally sensitive layer applied onto a surface of the substrate, comprising nitrocellulose particles and a photothermal conversion material.

2. The printing plate precursor of claim 1 wherein the substrate is hydrophilic.

3. The printing plate precursor of claim 1 or 2 wherein the substrate comprises an aluminum substrate.

4. The printing plate precursor of claim 3 wherein the aluminum substrate is treated by graining, by anodizing, with an interlayer material, or combinations thereof.

5. The printing plate precursor of any one of claims 1 to 4 wherein the nitrocellulose particles have a mean major dimension between about 0.03 and 0.5 microns.

6. The printing plate precursor of any one of claims 1 to 5 wherein the nitrocellulose particles comprise between about 5.0 and about 15.0 weight percent nitrogen.

7. The printing plate precursor of any one of claims 1 to 6 wherein the photothermal conversion material comprises a dye or a pigment.

8. The printing plate precursor of any one of claims 1 to 7 wherein the photothermal conversion material comprises carbon black.

9. The printing plate precursor of claim 8 wherein the photothermal conversion material comprises surface-functionalized carbon black.

10. The printing plate precursor of claim 8 wherein the photothermal conversion material comprises polymer-grafted carbon black.

11. The printing plate precursor of any one of claims 1 to 7 wherein the photothermal conversion material comprises bis(dichlorobenzene-1,2-thiol)nickel(2:1)tetrabutyl ammonium chloride, tetrachlorophthalocyanine aluminum chloride, or a compound represented by the structures:

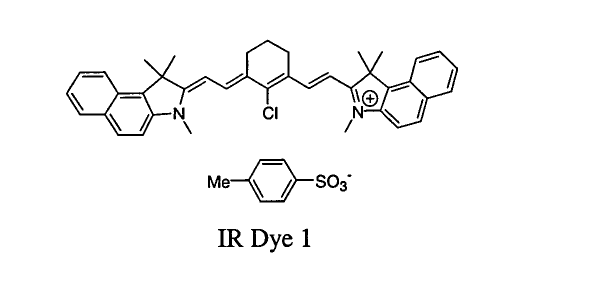

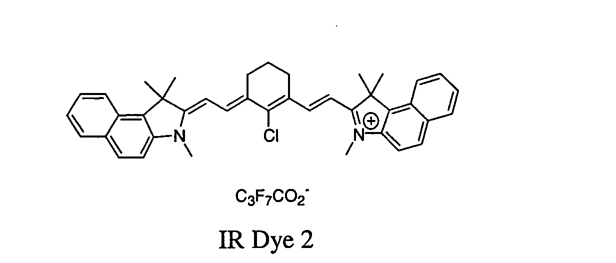

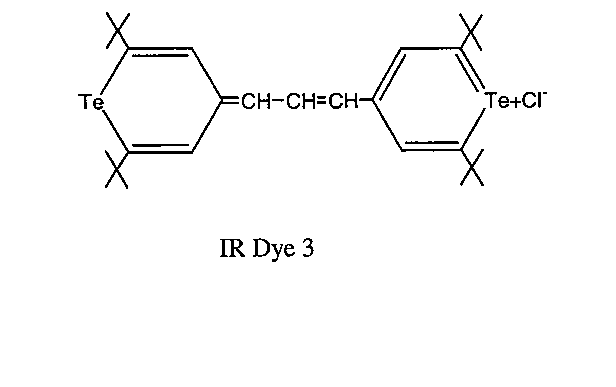

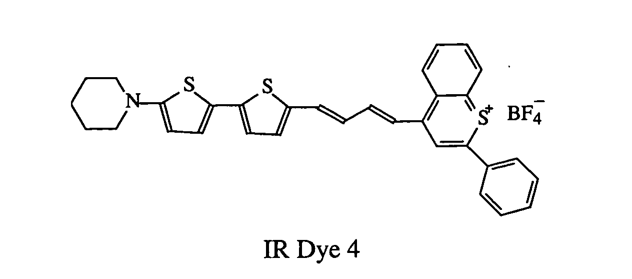

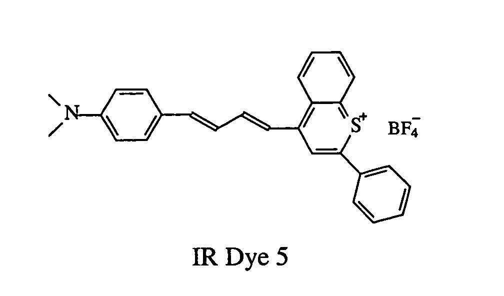

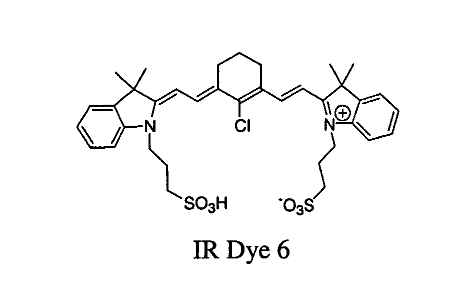

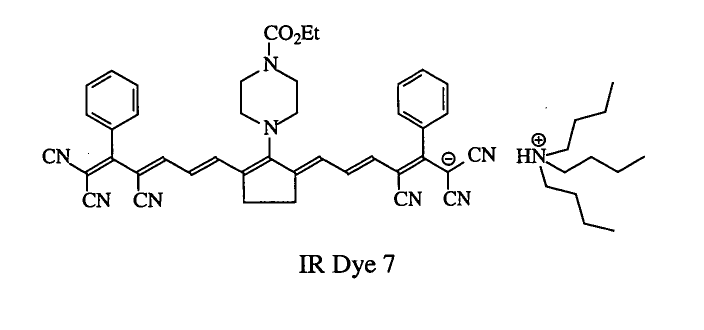

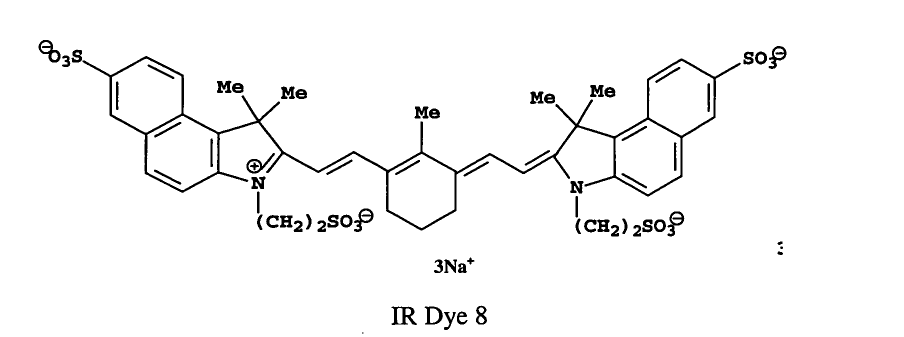

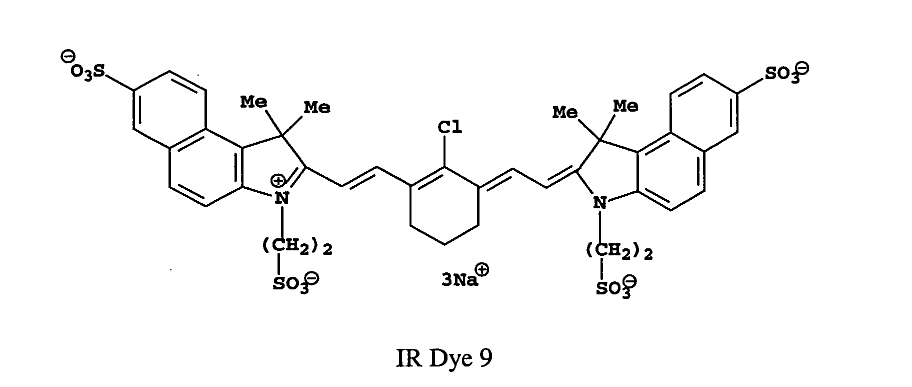

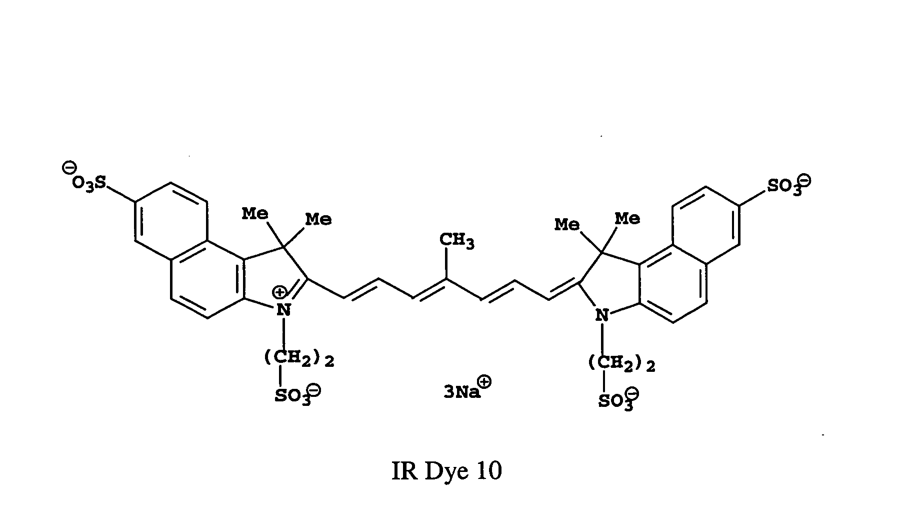

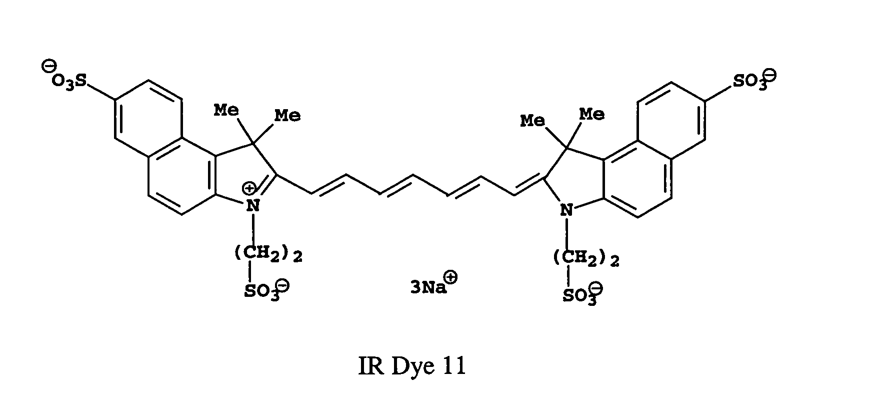

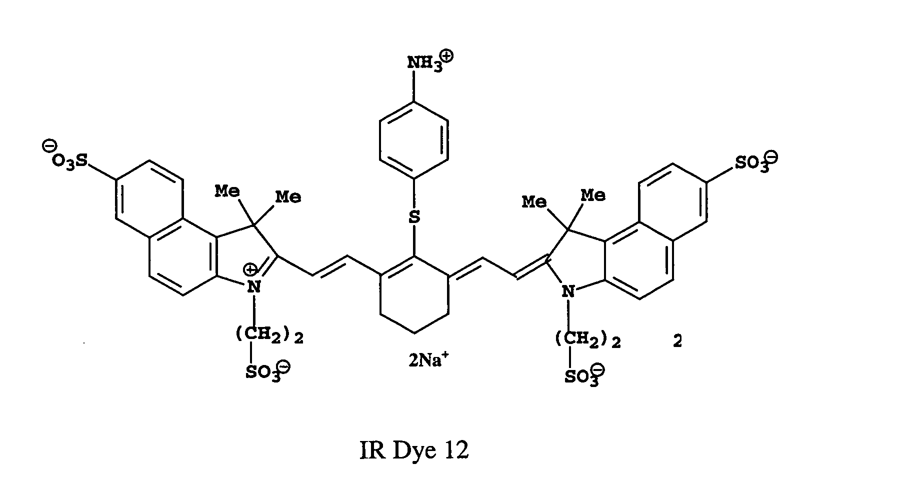

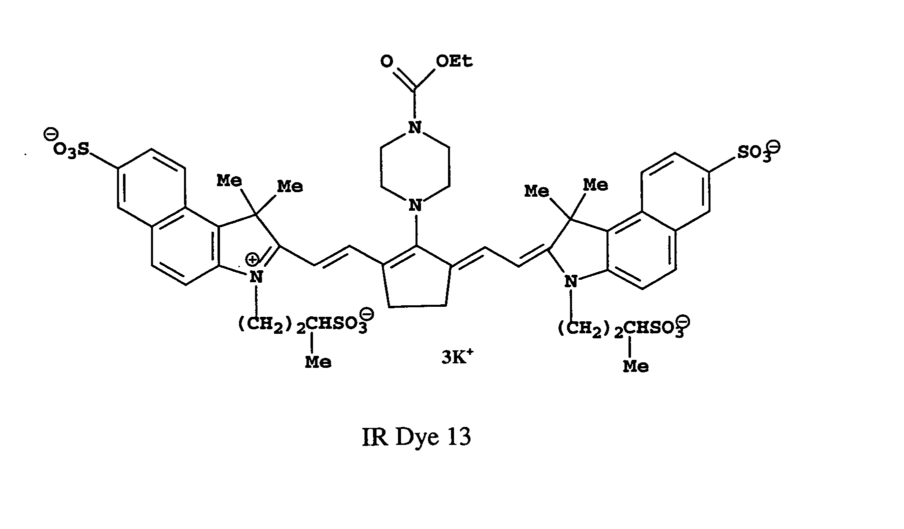

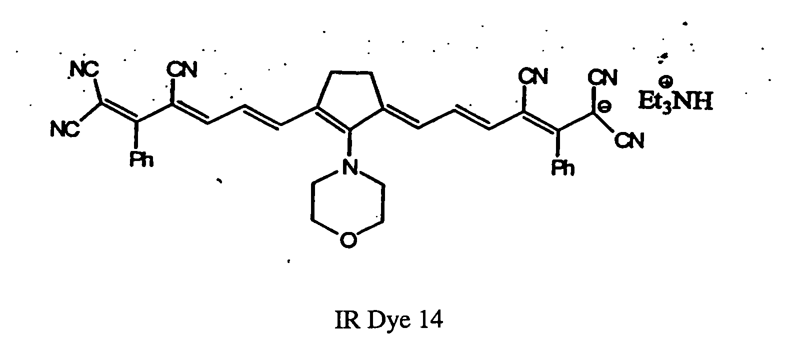

12. The printing plate precursor of any one of claims 1 to 11 wherein the thermally sensitive layer further comprises a polymeric binder.

13. The printing plate precursor of claim 12 wherein the polymeric binder comprises polyvinyl alcohol, polyvinyl pyrrolidone, polyethyleneimine, polyethyloxazoline, polyacrylamide, gelatin, polyacrylic acid, or mixtures, copolymers or derivatives thereof.

14. A method of making a printing plate precursor comprising:
providing a substrate;
applying onto the substrate a coating mixture comprising:
an aqueous carrier,
nitrocellulose particles,
a photothermal conversion material, and
optionally a hydrophilic binder and/or a surfactant; and
drying the coating mixture to form a thermally sensitive layer on a surface of the substrate.

15. The method of claim 14 wherein the nitrocellulose particles are added to the coating mixture as a nitrocellulose dispersion.

16. The method of claim 15 wherein the nitrocellulose dispersion further comprises at least one surfactant.

17. The method of any one of claims 14 to 16 further comprising:
imagewise exposing portions of the thermally sensitive layer to infrared radiation to form an imaged printing plate precursor, wherein exposed portions of the layer are less developable in fountain solution, printing ink or both, than unexposed portions of the thermally sensitive layer.

18. The method of claim 17 wherein the thermally sensitive layer is imagewise exposed to radiation after being placed on a direct imaging press.

19. The method of claim 18 wherein, after imagewise exposure, the thermally sensitive layer is exposed to fountain solution, ink or both to remove unexposed portions of the thermally sensitive layer.
